# EUROPÄISCHE PATENTSCHRIFT

(11) **EP 1 322 022 B1**
(45) Veröffentlichungstag und Bekanntmachung des Hinweises auf die Patenterteilung: **23.05.2007**
(21) Anmeldenummer: 01130796.4
(22) Anmeldetag: 23.12.2001
(51) Int. Cl.: H02K 1/14, H02K 15/02

(54) **Stator mit modularem Aufbau**
Stator with a modular construction
Stator à construction modulaire

(43) Veröffentlichungstag der Anmeldung: 25.06.2003
(73) Patentinhaber: GRUNDFOS A/S, DK-8850 Bjerringbro (DK)
(72) Erfinder: Hellegaard, Kjeld, 8850 Bjerringbro (DK); Stampe, Lars Toft, 8800 Viborg (DK)
(74) Vertreter: Hemmer, Arnd

(56) Entgegenhaltungen:
- WO-A-99/19969
- DE-A- 2 621 377
- DE-A- 19 756 575
- GB-A- 2 256 537
- US-B1- 6 201 334
- PATENT ABSTRACTS OF JAPAN vol. 008, no. 008 (E-221), 13. Januar 1984 (1984-01-13) & JP 58 172951 A (HITACHI SEISAKUSHO KK;OTHERS: 01), 11. Oktober 1983 (1983-10-11)
- PATENT ABSTRACTS OF JAPAN vol. 2000, no. 05, 14. September 2000 (2000-09-14) & JP 2000 050548 A (OKUMA CORP), 18. Februar 2000 (2000-02-18)

## Beschreibung

Die Erfindung betrifft einen Stator für einen Elektromotor sowie ein System zum modularen Aufbau von Statoren für Elektromotoren.

Die Statoren für Elektromotoren, wie sie beispielsweise zum Antrieb von Umwälzpumpen eingesetzt werden, weisen üblicherweise eine Vielzahl von Polschenkeln und einen die Polschenkel umfänglich umgebenen Polring auf. Dabei sind die Polschenkel entweder als einzelne Elemente oder als Polstern ausgebildet. Die einzelnen Polschenkel umgeben eine kreiszylindrische Ausnehmung, in die ein Rotor, beispielsweise ein Permanentmagnetrotor, eingesetzt wird. Zwischen den einzelnen Polschenkeln sind Öffnungen ausgebildet, durch welche die Statorspulen verlaufen. Die Polschenkel und der Polring bestehen üblicherweise aus einer Vielzahl aufeinandergeschichteter Bleche. Diese Bleche sind durch Umformen oder Verschweißen miteinander verbunden. Die Polringe und die Polschenkel bzw. Polsterne werden jeweils für einen bestimmten Stator- bzw. Motortyp vorgefertigt. Dies bedeutet insbesondere, dass die Polschenkel und die Polringe eine vorgegebene Anzahl von Blechen und somit eine vorgegebene Bauhöhe aufweisen, welche an einen speziellen Motortyp angepasst ist. Für verschiedene Motortypen, welche insbesondere unterschiedliche Stator- und Rotorlängen bzw.- bauhöhen aufweisen, ist es daher erforderlich, jeweils speziell angepasste Polschenkel und Polringe vorzufertigen. Daraus ergibt sich für die Fertigung unterschiedlicher Motortypen eine Vielzahl unterschiedlicher Einzelteile, welche vorgefertigt und gelagert werden müssen. Dies erhöht die Lager- und Herstellungskosten.

WO 99/19969 und DE 26 21 377 offenbaren Statoren für elektrische Maschinen, insbesondere für Generatoren, wie sie in Kraftwerken eingesetzt werden. Diese Statoren sind aufgrund ihrer Größe aus einzelnen Statorsegmenten ausgebildet. Die Verbindung der einzelnen ringförmigen Statorsegmente erfolgt durch einen umgebenden Statorrahmen sowie durch an den Statorsegmenten ausgebildete Flansche, welche miteinander verschraubt werden. Diese Montageart ist geeignet für große Statoren, wie sie in elektrischen Maschinen beispielsweise in Kraftwerken eingesetzt werden. Dieser Aufbau ist jedoch nicht universell auch bei kleineren elektrischen Maschinen einsetzbar, insbesondere ist der Aufbau eines solchen Stators für kleine Elektromotoren, wie sie beispielsweise zum Antrieb von Umwälzpumpen in Heizungsanlagen eingesetzt werden, zu kompliziert.

US 6,201,334 B1 offenbart ein weiteres System zum Zusammensetzen eines Stators für einen Generator, wie er beispielsweise in Kraftwerken eingesetzt wird. Bei diesem Stator besteht der Statorkern ebenfalls aus einer Vielzahl von ringförmigen Statorsegmenten, welche axial aneinander gesetzt werden und durch einen umgebenden Statorrahmen zusammengehalten werden. Auch dieser Aufbau ist, wie oben beschrieben, nicht zur kostengünstigen Montage von Statoren für kleine Elektromotoren geeignet.

GB 2 256 537 A offenbart einen Aufbau eines Stators gemäß dem Oberbegriff des Anspruch 1, welcher zwei axial äußere Statorsegmente bestehend aus einem Polring und einstückig mit diesem ausgebildeten Polschenkeln sowie Polring- und Polschenkelsegmenten umfasst, welche zwischen den axial äußeren Statorsegmenten angeordnet werden können. Bei diesem Aufbau werden zunächst die äußeren Statorsegmente zusammengesetzt, die Wicklungen aufgebracht, die Statorsegmente dann auseinander gezogen und die dazwischenliegenden Polschenkel- und Polringsegmente eingesetzt und in radialer Richtung miteinander verbunden. In diesem Zustand wird der Stator axial durch die Spulen zusammengehalten. Nachteilig bei diesem Aufbau ist, dass der Statorkern vor dem Aufbringen der Spulen aus einer Vielzahl von Einzelteilen besteht, welche umständlich zu handhaben ist.

Es ist Aufgabe der Erfindung, einen Stator und ein System zum Aufbau von Statoren zu schaffen, welche eine Reduzierung der Teilvielfalt sowie eine einfache Montage ermöglichen.

Diese Aufgabe wird durch einen Stator mit den im Anspruch 1 angegebenen Merkmalen sowie mit einen System mit den im Anspruch 7 angegebenen Merkmalen gelöst. Bevorzugte Ausführungsformen ergeben sich aus den entsprechenden Unteransprüchen.

Der erfindungsgemäße Stator weist eine Vielzahl von Polschenkeln und einen die Polschenkel umfänglich umgebenden Polring auf. Dabei greifen die Polschenkel vorzugsweise in Nuten ein, welche im Inneren des Polrings ausgebildet sind und sich parallel zur Statorlängsachse erstrecken. So kann eine mechanische und magnetische Verbindung zwischen Polschenkeln und Polring geschaffen werden. Die Polschenkel bestehen jeweils aus zumindest zwei vorgefertigten Polschenkelelementen, welche jeweils eine Vielzahl aufeinander geschichteter Polbleche aufweisen. Diese Ausgestaltung ermöglicht es, die Polschenkel je nach gewünschter Länge bzw. Bauhöhe aus unterschiedlichen vorgefertigten Polschenkelelementen zusammenzusetzen. Diese vorgefertigten Polschenkelelemente können dann so miteinander kombiniert werden, dass Polschenkel verschiedener Länge- bzw. Bauhöhe aus vorgefertigten, standardisierten Polschenkelelementen zusammengesetzt werden können, um Statoren unterschiedlicher Länge bzw. Bauhöhe zu fertigen. Auf diese Weise kann die Teilevielfalt reduziert werden, da nicht für jeden Stator Polschenkel bestimmter Bauhöhe vorgefertigt und gelagert werden müssen. Es ist vielmehr möglich, die Polschenkel modular aus vorgefertigten Polschenkelelementen geringerer Bauhöhe zusammenzusetzen. Durch Kombination verschiedener Anzahlen von Polschenkelelementen kann somit eine Vielzahl von Polschenkeln unterschiedlicher Bauhöhe geschaffen werden.

Die unterschiedliche Bauhöhe der Polschenkelelemente resultiert aus einer unterschiedlichen Anzahl von aufeinander geschichteten Blechen, aus denen die Polschenkelelemente gefertigt sind. Die einzelnen Bleche der Polschenkelelemente werden beispielsweise durch Verschweißen oder Verpressen miteinander verbunden. Insbesondere ist es möglich, die Bleche, aus denen die Polschenkelelemente zusammengesetzt sind, gleich während des Ausstanzens im sogenannten Stanz-Paketierverfahren miteinander durch Umformung zu verbinden. Die zusammengesetzten Polschenkelelemente werden durch den die Polschenkel umgebenden Polring zusammengehalten. Es ist somit kein zusätzlicher Verbindungsvorgang zum Verbinden der Polschenkelelemente erforderlich.

Vorzugsweise weisen zumindest zwei Polschenkelelemente unterschiedliche Bauhöhen auf. Durch Vorfertigung von Polschenkelelementen unterschiedlicher Bauhöhe ist es möglich, durch Kombination der verschiedenen Polschenkelelemente eine größere Anzahl verschiedener Polschenkellängen bzw. -bauhöhen aus den Polschenkelelementen zusammenzusetzen. Durch das Vorsehen von Polschenkelelementen unterschiedlicher Bauhöhen kann eine feinere Abstufung der erzeugbaren Polschenkellängen erreicht werden. Es kann aus einer geringen Anzahl standardisierter Polschenkelelemente unterschiedlicher Bauhöhe eine große Vielzahl verschieden hoher Polschenkel und somit Statoren gebildet werden. Auf diese Weise wird die Anzahl der vorzuhaltenden Einzelteile reduziert.

Weiter bevorzugt ist auch der Polring aus zumindest zwei Polringelementen zusammengesetzt. Dies ermöglicht auch, den Polring durch Kombination verschiedener Polringelemente modular zusammenzusetzen. Auf diese Weise können aus vorgefertigten, standardisierten Polringelementen Polringe verschiedener Bauhöhe ausgebildet werden. Es ist somit ebenfalls nicht mehr erforderlich, Polringe verschiedener Bauhöhe für jede zu fertigende Statorart speziell zu fertigen und vorzuhalten.

Auch die Polringelemente sind jeweils aus einer Vielzahl aufeinandergeschichteter Polbleche zusammengesetzt. Die Anzahl der aufeinandergeschichteten Polbleche bestimmt die Bauhöhe des Polringelementes. Die einzelnen Polbleche werden durch Verschweißen oder Umformen miteinander verbunden.

Vorzugsweise weisen zumindest zwei Polringelemente unterschiedliche Bauhöhen auf. Diese Ausgestaltung erhöht die Variabilität beim Aufbau eines Polringes. So können unterschiedlich große bzw. hohe Polringelemente miteinander kombiniert werden, um Polringe verschiedener Bauhöhe zu schaffen. Die Polringelemente werden dazu vorzugsweise in definierten unterschiedlichen Bauhöhen vorgehalten und je nach zu fertigendem Stator in unterschiedlicher Kombination zusammengesetzt, um einen Polring entsprechender Bauhöhe zu erzeugen.

Weiter bevorzugt weist jeweils ein Polringelement dieselbe Bauhöhe auf wie ein Polschenkelelement, wobei die Polschenkelelemente und die Polringelemente derart versetzt zueinander angeordnet sind, dass sie einander überlappen. Zweckmäßigerweise ist zu jedem Polschenkelelement einer bestimmten Bauhöhe ein korrespondierendes Polringelement mit gleicher Bauhöhe vorhanden. So kann leicht zu einem Polschenkel bestimmter Bauhöhe ein passender Polring mit derselben Bauhöhe geschaffen werden. Für den Polschenkel und den Polring werden jeweils entsprechende Elemente mit gleicher Bauhöhe ausgewählt. Da die ausgewählten Polringelemente dieselbe Bauhöhe wie die ausgewählten Polschenkelelemente aufweisen, kann auf einfache Weise sichergestellt werden, dass der Polring die passende Bauhöhe zu einem zusammengesetzten Polschenkel aufweist. Beim Zusammensetzen werden die Polschenkelelemente und die Polringelemente so zusammengesetzt, dass sie einander überlappen. Auf diese Weise wird erreicht, dass die Polschenkel und der zugehörige Polring keine durchgängigen Trennfugen aufweisen.

Vielmehr sind die Trennfugen in den Polschenkeln in Statorlängsrichtung versetzt zu den Trennfugen im Polring angeordnet. Auf diese Weise können die verwendeten Polschenkelelemente und Polringelemente sich gegenseitig zusammenhalten, so dass keine weiteren Einrichtungen zum Fixieren der einzelnen Elemente erforderlich sind.

Die Polschenkel können als Einzelpole oder als zusammenhängender Polstern ausgebildet sein. Im Falle von Einzelpolen werden die Polschenkel beim Einsatz in den Polring zu einem Polstern zusammengesetzt, wobei die einzelnen Polschenkel einen kreiszylindrischen Freiraum umgeben, welcher zur Aufnahme eines Rotors bestimmt ist. Im Falle eines Polsterns sind die Polschenkel zusammenhängend ausgebildet. Die einzelnen Polschenkel sind in diesem Fall in einem inneren Bereich verbunden, welcher eine kreiszylindrische Öffnung umgibt, in die später ein Rotor eingesetzt wird. Im Falle eines Polsterns werden die einzelnen Bleche bereits in der Form des Polsterns ausgestanzt und zu Polschenkelelementen zusammengesetzt, welche die Form des Polsterns aufweisen. Dabei werden die einzelnen Bleche in der oben beschriebenen Weise miteinander verbunden.

Die Erfindung betrifft weiter ein System zum Aufbau von Statoren für Elektromotoren. Das erfindungsgemäße System erlaubt einen modularen Aufbau von Statoren, bei dem vorgefertigte standardisierte Bauteile in unterschiedlichen Anzahlen und Kombinationen zusammengefügt werdenn können, um Statoren unterschiedlicher Bauhöhe aus einer begrenzten Anzahl unterschiedlicher Einzelteile zusammensetzen zu können. Die Einzelteile bilden eine Art Baukasten, aus dem verschiedene Statoren unterschiedlicher Bauhöhe aufgebaut werden können. Nach dem erfindungsgemäßen System werden die Statoren aus einzelnen Polschenkelelementen, welche jeweils eine Vielzahl von aufeinandergeschichteten Polblechen aufweisen, und zugehörigen Polringen zusammengesetzt. Die einzelnen Bleche eines Polschenkelelementes sind fest miteinander verbunden, beispielsweise durch Umformen oder Verschweißen, so dass ein Polschenkelelement ein vorgefertigtes Bauteil bildet. Der Polring ist vorzugsweise ebenfalls aus einzelnen aufeinandergeschichteten Blechen gebildet, welche fest miteinander verbunden werden. Es können verschiedene Anzahlen von Polschenkelelementen aufeinandergesetzt und mit einem zugehörigen Polring verbunden werden, um Statoren unterschiedlicher Bauhöhe auszubilden. Dabei wird die Bauhöhe des Stators durch Anzahl und Art der Polschenkelelemente bestimmt, welche zusammengesetzt werden. So können die Polschenkelelemente mit festen Bauhöhen, d. h. festen Anzahlen von Blechen, vorgehalten werden und je nach gewünschter Bauhöhe des zu erzeugenden Stators kann eine entsprechende Anzahl von Polschenkelelementen zusammengesetztwerden. Dazu wird vorzugsweise ein Polring passender Länge ausgewählt, um die Polschenkelelemente zusammenzuhalten. Dazu können im Inneren des Polringes Nuten ausgebildet sein, in die die Polschenkel bzw. Polschenkelelemente mit entsprechenden Vorsprüngen eingreifen, um eine mechanische Verbindung und einen magnetischen Übergang zu schaffen.

Vorzugsweise sind in dem System zumindest zwei Polschenkelelemente unterschiedlicher Bauhöhe vorgesehen, welche zum Ausbilden von Polschenkeln unterschiedlicher Bauhöhe miteinander kombinierbar sind. Das Vorsehen von Polschenkelelementen unterschiedlicher Bauhöhe, d. h. mit einer unterschiedlichen Anzahl von Polblechen, erlaubt eine größere Anzahl von Kombinationsmöglichkeiten der unterschiedlichen Polschenkelelemente, um Polschenkel unterschiedlicher Bauhöhen herzustellen. Durch das Vorsehen von Polschenkelelementen unterschiedlicher Bauhöhe kann eine feinere Abstufung der Polschenkel-Bauhöhen, welche sich aus den Polschenkeln kombinieren lassen, geschaffen werden. Gemäß dem System wird eine begrenzte Anzahl von Typen von Polschenkelelementen mit unterschiedlicher Bauhöhe vorgefertigt. Aus diesen vorgefertigten Polschenkelelementen lassen sich dann nach Art eines Baukastens Polschenkel der gewünschten Bauhöhe für einen bestimmten Stator- bzw. Motortyp zusammensetzen. Auf diese Weise ist es nicht mehr erforderlich, für jeden Motor- bzw. Statortyp speziell vorgefertigte Polschenkel bereitzuhalten.

Weiter bevorzugt ist der Polring aus zumindest zwei Polringelementen zusammensetzbar. Auf diese Weise wird auch der Polring modular aufgebaut, so dass er je nach erforderlicher Bauhöhe aus unterschiedlichen Anzahlen von Polringelementen zusammengesetzt werden kann. Auf diese Weise kann ein Polring mit einer zu den Polschenkeln korrespondierenden Bauhöhe geschaffen werden. Es ist nicht mehr erforderlich, für jeden Statortyp einen passenden Polring zu fertigen und bereitzuhalten. Vielmehr kann der gewünschte Polring aus vorgefertigten Polringelementen zusammengesetzt werden, wobei je nach gewünschter Bauhöhe eine unterschiedliche Anzahl von Polringelementen zusammengesetzt wird.

Um eine feinere Abstufung der erzeugbaren Bauhöhen zu erreichen, sind zumindest zwei Polringelemente unterschiedlicher Bauhöhe vorgesehen, welche zum Ausbilden von Polringen unterschiedlicher Bauhöhe miteinander kombinierbar sind. Die unterschiedlichen Bauhöhen der Polringelemente werden durch unterschiedliche Anzahlen von aufeinandergeschichteten Polblechen erreicht. Es können beispielsweise drei unterschiedliche Bauhöhen für Polringelemente vorgesehen sein, wobei die Polringelemente jeder Bauhöhe in großer Stückzahl vorgefertigt werden können. Um einen Polring bestimmter Bauhöhe zu bilden, können dann Polringelemente der verschiedenen Bauhöhen kombiniert werden, um die gewünschte Polringhöhe zu erreichen. Der Polring wird somit in gleicher Weise modular aufgebaut wie die Polschenkel.

Vorzugsweise ist zu jedem Polschenkelelement bestimmter Bauhöhe ein passendes Polringelement gleicher Bauhöhe vorgesehen. Dies stellt sicher, dass zu jedem Polschenkel bestimmter Bauhöhe, welcher sich aus den zur Verfügung stehender Polschenkelelementen kombinieren lässt, ein passender Polring gleicher Bauhöhe aus den zur Verfügung stehenden Polringelementen aufgebaut werden kann. Es muss nur zu jedem verwendeten Polschenkelelement das passende Polringelement verwendet werden.

Die Polringelemente und die Polschenkelelemente unterschiedlicher Bauhöhe sind vorzugsweise derart versetzt zueinander anordbar, dass sie einander überlappen. D. h. beim Zusammenbau des Stators wird ein Polschenkelelement bestimmter Bauhöhe nicht direkt in das Polringelement gleicher Bauhöhe eingesetzt. Vielmehr wird beispielsweise ein Polschenkelelement geringerer Bauhöhe in ein Polringelement größerer Bauhöhe eingesetzt. Das zu dem Polring größerer Bauhöhe passende Polschenkelelement wird dann in ein Polringelement eingesetzt, welches die gleiche Bauhöhe wie das kleinere Polschenkelelement aufweist. Auf diese Weise wird erreicht, dass das längere Polschenkelelement nur teilweise in das längere Polringelement hineinragt und somit die Trennfuge zwischen den beiden Polringelementen überdeckt. Somit besteht zwischen den Polschenkelelementen und den Polringelementen keine durchgehende Trennfuge. Vielmehr liegt eine Trennfuge zwischen den Polringelementen immer an einer Position in Richtung der Bauhöhe bzw. Statorlängsachse, an der keine Trennfuge in den Polschenkelelementen vorgesehen ist. Auf diese Weise kann ein einfacher und sicherer Zusammenhalt der einzelnen Bauteile erreicht werden, ohne dass zusätzliche Befestigungselemente erforderlich sind.

Die Polschenkelelemente können als Einzelpole oder als zusammenhängender Polstern ausgebildet sein. Im Falle von Einzelpolen werden diese derart in den Polring eingesetzt, dass sie einen Polstern bilden und eine innere kreiszylindrische Ausnehmung umgeben, in die ein Rotor eingesetzt werden kann. Im Falle eines Polsterns sind die einzelnen Polschenkel an den Innenseiten, d. h. an den dem Polring abgewandten Seiten miteinander verbunden und umgeben ebenfalls eine kreiszylindrische Ausnehmung, in die ein Rotor einsetzbar ist. In beiden Fällen sind die Polschenkelelemente und damit die Polschenkel aus einzelnen Polblechen zusammengesetzt. Um einen zusammenhängenden Polstern zu schaffen, werden die einzelnen Polbleche in der entsprechenden Form ausgestanzt und durch Schweißen oder Verformen, vorzugsweise gleichzeitig mit dem Ausstanzen im Stanz-Paketierverfahren, zusammengesetzt.

Nachfolgend wird die Erfindung beispielhaft anhand der beigefügten Figuren beschrieben. In diesen zeigt:
- Fig. 1: eine geschnittene perspektivische Ansicht des erfindungsgemäßen Stators,
- Fig. 2: einen Satz unterschiedlich hoher Polringelemente,
- Fig. 3: einen Satz unterschiedlich hoher Polschenkelelemente,
- Fig. 4: einen aus den Polschenkelelementen und Polringelementen gemäß Fig. 3 und 4 zusammengesetzten Stator,
- Fig. 5: einen weiteren Stator anderer Bauhöhe und
- Fig. 6: einen dritten Stator anderer Bauhöhe.

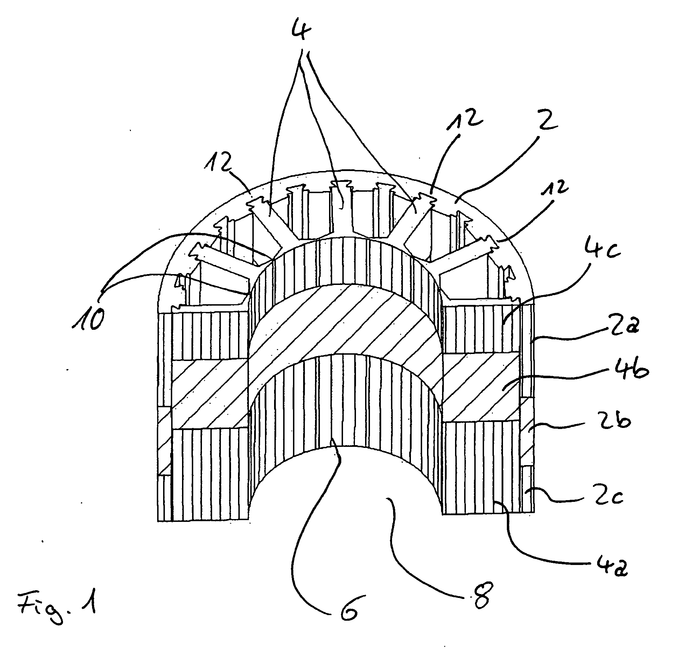

Fig. 1 zeigt eine entlang dem Durchmesser geschnittene perspektivische Ansicht eines Stators gemäß der Erfindung ohne eingesetzte Statorwicklungen. Der Stator besteht aus einem Polring 2, in den einzelne Polschenkel 4 kreisförmig am Innenumfang des Polrings 2 eingesetzt sind. Die Polschenkel 4 bilden gemeinsam einen Polstern 6. Die Polschenkel 4 umgeben eine kreiszylindrische Ausnehmung 8, welche zur Aufnahme eines Rotors (hier nicht gezeigt) dient. Am Umfang der Ausnehmung 8 sind die Polschenkel 4 über Stege 10 miteinander verbunden, dass sie einen zusammenhängenden Polstern 6 bilden. Der Polring 2 und die Polschenkel 4 bestehen aus einzelnen Polblechen, welche in Richtung der Längs- bzw. Symmetrieachse von Polring 2 und Polstern 6, d. h. der Statorlängsachse aufeinandergeschichtet sind.

Am Innenumfang des Polrings 2 sind Nuten 12 ausgebildet, in die die Polschenkel 4 eingesetzt sind, um eine mechanische Verbindung zwischen den Polschenkeln 4 und dem Polring 2 sowie einen magnetischen Übergang zu schaffen. Entsprechend der gewünschten Bauhöhe sind entsprechende Anzahlen von Polblechen aufeinandergeschichtet und miteinander verbunden. Die Verbindung der einzelnen Polbleche erfolgt durch Verschweißen oder Umformen. Dabei können die Polbleche direkt nach dem Stanzen im sogenannten Stanz-Paketierverfahren miteinander verpresst werden.

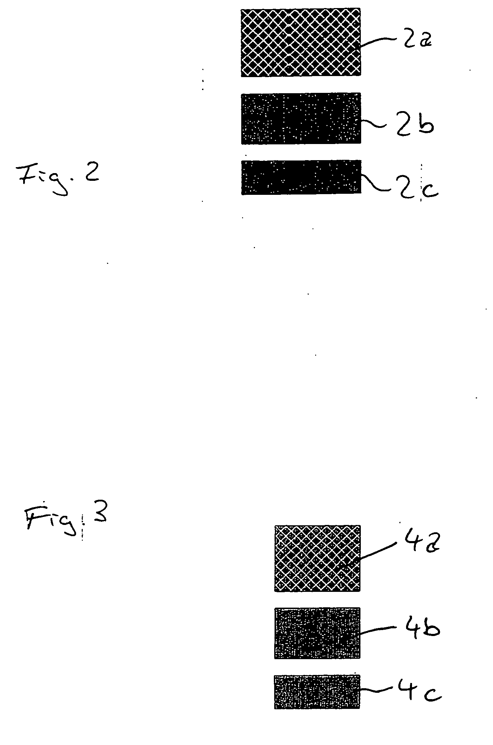

Der Polring 2 sowie der Polstern 6 weisen jeweils einen modularen Aufbau auf. Der Polring ist aus drei Polringelementen 2a, 2b und 2c zusammengesetzt. Entsprechend ist der Polstern 8 aus Polstern- bzw. Polschenkelelementen 4a, 4b und 4c zusammengesetzt. Das Polschenkelelement 4a weist eine größere Bauhöhe auf als das Polschenkelelement 4b und dieses wiederum weist eine größere Bauhöhe auf als das Polschenkelelement 4c. Beispielsweise kann die Bauhöhe des Polschenkelelementes 4a 40 mm, die des Polschenkelelementes 4b 30 mm und die des Polschenkelelementes 4c 20 mm betragen. Die Polringelemente 2a, 2b, 2c sind in ihrer Bauhöhe entsprechend abgestuft, wobei das Polringelement 2a dieselbe Bauhöhe wie das Polschenkelelement 4a, das Polringelement 2b dieselbe Bauhöhe wie das Polschenkelelement 4b und das Polringelement 2c dieselbe Bauhöhe wie das Polschenkelelement 4c aufweist. Die Polringelemente 2a, 2b, 2c sind in umgekehrter Reihenfolge aufeinandergeschichtet wie die Polschenkelelemente 4a, 4b und 4c. Dadurch wird erreicht, dass die Trennfugen zwischen den Polschenkelelementen 4a, 4b und 4c versetzt zu den Trennfugen zwischen den Polringelementen 2a, 2b und 2c angeordnet sind. Der modulare Aufbau des Stators und die daraus resultierenden Kombinationsmöglichkeiten werden detaillierter anhand der schematischen Darstellungen in Fig. 2 bis Fig. 6 erläutert. Die zusammengesetzten Polschenkelelemente 4a, 4b und 4c sowie Polringelemente 2a, 2b und 2c bilden gemeinsam den Stator für einen Elektromotor aus. Die Einzelteile werden zusammengesteckt und können vorzugsweise allein durch die Verbindung von Polschenkelelementen 4a, 4b und 4c mit den Polringelementen 2a, 2b und 2c form- oder kraftschlüssig miteinander verbunden werden. Um eine zusätzliche dauerhafte Verbindung zwischen den einzelnen Elementen zu erreichen, kann zusätzlich ein Verpressen, d. h. Umformen der Elemente oder Verschweißen oder Verlöten erfolgen. Auf diese Weise wird durch Zusammenfügen der einzelnen Elemente ein gewünschter Stator für einen Elektromotor ausgebildet.

Fig. 2 zeigt schematisch den modularen Aufbau des Polringes. In Fig. 2 sind drei Polringelemente 2a, 2b und 2c von unterschiedlicher Bauhöhe gezeigt. Die unterschiedlichen Bauhöhen werden durch unterschiedliche Anzahlen von geschichteten Polblechen erzeugt. Die Polbleche jeden Polringelementes 2a, 2b oder 2c werden wie beschrieben fest miteinander verbunden, um eine vorgefertigte Baugruppe zu bilden. Die vorgefertigten Polringelemente 2a, 2b und/oder 2c können in unterschiedlicher Anzahl und/oder in Kombinationen miteinander verbunden werden, um Polringe unterschiedlicher Bauhöhe zu schaffen. Der erzeugte Polring des Stators ist somit modular aufgebaut. Dergewünschte Polring kann baukastenähnlich aus vorgefertigten, standardisierten Bauteilen zusammengesetzt werden, ohne dass für jeden Statortyp bzw. jeden Motortyp spezielle Polringe vorgefertigt und bereitgehalten werden müssen.

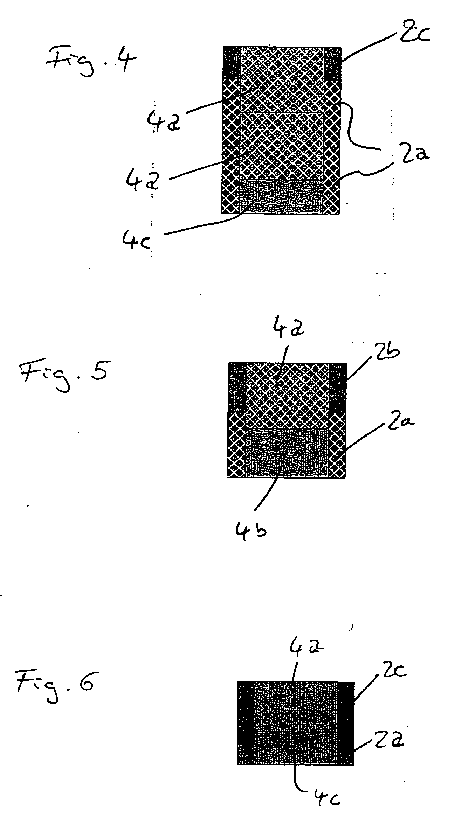

Fig. 3 zeigt zu den in Fig. 2 gezeigten Polringelementen 2a, 2b und 2c zugehörige Polschenkelelemente 4a, 4b und 4c. Die Polschenkelelemente 4a, 4b und 4c können als Einzelpole ausgebildet sein oder eine Grundfläche entsprechend der Form des Polsterns 6 aufweisen. Im Falle von Einzelpolen werden die Polschenkel bzw. Polschenkelelemente beim Einsatz in den Polring 2 zu einem Polstern 6 zusammengefügt. Die Polschenkelelemente 4a, 4b und 4c weisen unterschiedliche Bauhöhen in vordefinierten Abstufungen auf. Die Abstufungen der Bauhöhen entsprechen den Abstufungen der Bauhöhen der Polringelemente 2a, 2b und 2c, welche in Fig. 2 schematisch gezeigt sind. Die unterschiedlichen Bauhöhen der Polschenkelelemente 4a, 4b und 4c werden durch unterschiedliche Anzahlen von aufeinandergeschichteten Polblechen erreicht. Diese Polbleche werden fest miteinander verbunden, um ein vorgefertigtes Bauelement in Form eines Polschenkelelementes 4a, 4b oder 4c zu bilden. Die Polschenkelelemente 4a, 4b und 4c können in unterschiedlichen Anzahlen und Kombinationen miteinander verbunden werden, um Polschenkel 4 bzw. Polsterne 6 von gewünschter Bauhöhe zu erzeugen. Auf diese Weise können gemeinsam mit den Polringelementen 2a, 2b und 2c Statoren unterschiedlicher Bauhöhe bzw. Länge für verschiedene Elektromotoren aus gleichen vorgefertigten Bauteilen zusammengesetzt werden.

Fig. 4 zeigt schematisch einen aus den Polringelementen 2a und 2c und den Polschenkelelementen 4a und 4c zusammengesetzten Stator. Zwei Polringelemente 2a und zwei korrespondierende Polschenkelelemente 4a einer ersten Bauhöhe sowie ein ein Polringelement 2c einer kleineren Bauhöhe und ein korrespondierendes Polschenkelelement 4c sind zusammengesetzt. Die Polringelemente 2a weisen dieselbe Bauhöhe wie die Polschenkelelemente 4a und das Polringelement 2c weist dieselbe Bauhöhe wie das Polschenkelelement 4c auf. Die Polschenkelelemente 4a und 4c sowie die Polringelemente 2a und 2c sind versetzt bzw. überlappend zueinander angeordnet. Dies wird dadurch erreicht, dass das Polschenkelelement 4c kleiner Bauhöhe in ein Polringelement 2a großer Bauhöhe eingesetzt wird. Anschließend wird in das gleiche Polringelement 2a das erste Polschenkelelement 4a großer Bauhöhe eingesetzt, so dass es das erste Polringelement 2a überragt. An das erste Polringelement 2a schließt sich das zweite Polringelement 2a an, so dass das erste Polschenkelelement 4a in das zweite Polringelement 2a hineinragt. An das Polschenkelelement 4a schließt sich das zweite Polschenkelelement 4a an, welches somit das zweite Polringelement 2a überragt. Der hervorragende Teil des Polschenkelelements 4a wird von dem Polringelement 2c mit kleinerer Bauhöhe umgeben, wobei die Bauhöhe des Polringelementes 2c der Bauhöhe des Polschenkelelementes 4c entspricht. Durch die überlappende Anordnung der Polschenkelelemente 4a, 4c und der Polringelemente 2a und 2c wird eine sichere mechanische Verbindung zwischen den einzelnen Bauteilen erreicht, ohne dass durchgehende Trennfugen entstehen.

Fig. 5 zeigt eine zweite Kombinationsmöglichkeit der in Fig. 2 und Fig. 3 gezeigten Polschenkel- und Polringelemente, um einen Stator anderer Baulänge bzw. Bauhöhe zu erzeugen. Der Stator gemäß Fig. 5 weist eine geringere Bauhöhe als der Stator gemäß Fig. 4 auf. Der Stator setzt sich aus einem Polschenkelelement 4a erster Bauhöhe und einem Polschenkelelement 4b einer geringeren Bauhöhe zusammen. Entsprechend sind Polringelemente 2a und 2b mit zu den Polschenkelelementen 4a und 4b korrespondierenden Bauhöhen vorgesehen. Auch in diesem Aufführungsbeispiel sind die Polschenkelelemente 4a, 4b und die Polringelemente 2a und 2b versetzt zueinander angeordnet. Dies wird dadurch erreicht, dass das kürzere Polschenkelelement 4b in dem längeren Polringelement 2a und das längere Polschenkelelement 4a in dem kürzeren Polringelement 2b angeordnet sind. Auf diese Weise werden durchgehende Trennfugen vermieden und die einzelnen Elemente können auf einfache Weise mechanisch miteinander verbunden werden.

Fig. 6 zeigt eine dritte Statorvariante, welche aus Polringelementen 2a und 2c sowie Polschenkelelementen 4a und 4c gemäß Fig. 3 und 4 zusammengesetzt sind. Der Aufbau entspricht im Wesentlichen dem anhand von Fig. 5 erläuterten Aufbau, wobei anstelle des Polschenkelelementes 4b und des Polringelementes 2b mit mittlerer Bauhöhe ein Polschenkelelement 4c und ein Polringelement 2c mit kurzer Bauhöhe eingesetzt ist, so dass ein Stator mit insgesamt geringerer Bauhöhe geschaffen wird. Auch hier sind die Polschenkelelemente 4a, 4c und Polringelement 2a und 2c versetzt bzw. vertauscht zueinander angeordnet, so dass sie sich überlappen, um eine Verbindung der einzelnen Elemente zu erzeugen.

Wie anhand von Fig. 4 bis 6 erläutert, bieten die Sätze von Polschenkelelementen 4a - 4c und Polringelementen 2a - 2c, wie sie anhand von Fig. 2 und 3 beschrieben worden sind, zahlreiche Möglichkeiten, aus einem vorgefertigten Satz von Bauteilen verschiedene Statoren unterschiedlicher Länge auf einfache Weise zusammenzusetzen, ohne dass Polringe und Polschenkel für jede gewünschte Statorlänge extra gefertigt werden müssen. Auch wenn die anhand von Fig. 3 und 4 beschriebenen Sätze von Polschenkel- und Polringelementen aus jeweils drei unterschiedlich hohen bzw. langen Elementen bestehen, sind auch Sätze mit größerer oder kleinerer Anzahl von Elementen denkbar, um die Zahl der möglichen Abstufungen von Statorlängen einzustellen. Je größer die Anzahl von Elementen unterschiedlicher Bauhöhe ist, um so feiner kann die Abstufung der erzeugbaren Bauhöhen von Statoren sein. Eine Anzahl von drei unterschiedlichen Elementbauhöhen stellt einen guten Kompromiss zwischen erreichbarer Abstufung und minimaler Anzahl von unterschiedlichen Bauelementen dar.

### BEZUGSZEICHENLISTE

- 2 -: Polring
- 2a, 2b, 2c -: Polringelemente
- 4 -: Polschenkel
- 4a, 4b, 4c -: Polschenkelelemente
- 6 -: Polstern
- 8 -: Ausnehmung
- 10 -: Stege
- 12 -: Nuten

## Patentansprüche

1. Stator für einen Elektromotor mit einer Vielzahl von Polschenkeln (4) und einem die Polschenkel (4) umfänglich umgebenden Polring (2), bei welchem die Polschenkel (4) jeweils aus zumindest zwei vorgefertigten und in Statorlängsrichtung zusammengesetztten Polschenkelelementen (4a, 4b, 4c) gebildet sind, welche jeweils eine Vielzahl aufeinander geschichteter Polbleche aufweisen, **dadurch gekennzeichnet, dass** die zusammengesetzten Polschenkelelemente (4a, 4b, 4c) jedes Polschenkels (4) derart mit dem umgebenden Polring (2) oder einem umgebenden Polringelement (2a, 2b, 2c), welche aus einer Vielzahl aufeinandergeschichteter Polblechegebildet sind, verbunden sind, dass die Polschenkelelemente durch den Polring oder das Polringelement zusammengehalten werden.

2. Stator nach Anspruch 1, bei welchem zumindest zwei Polschenkelelemente (4a, 4b, 4c) unterschiedliche Bauhöhen aufweisen.

3. Stator nach einem der vorangehenden Ansprüche, bei welchem der Polring (2) aus zumindest zwei Polringelementen (2a, 2b, 2c) zusammengesetzt ist.

4. Stator nach Anspruch 3, bei welchem zumindest zwei Rotringelemente unterschiedliche Bauhöhen aufweisen.

5. Stator nach Anspruch 4, bei welchem jeweils ein Polringelement (2a, 2b, 2c) dieselbe Bauhöhe aufweist wie ein Polschenkelelement (4a, 4b, 4c), wobei die Polschenkelelemente (4a, 4b, 4c) und die Polringelemente (2a, 2b, 2c) derart versetzt zueinander angeordnet sind, dass sie einander überlappen.

6. Stator nach einem der vorangehenden Ansprüche, bei welchem die Polschenkel (4) als Einzelpole oder als zusammenhängender Polstern (6) ausgebildet sind.

7. System zum Aufbau von Statoren für Elektromotoren mit einzelnen Polschenkelelementen (4a, 4b, 4c), welche jeweils eine Vielzahl von aufeinander geschichteten Polblechen aufweisen, und zugehörigen Polringen (2), welche aus einer Vielzahl von aufeinandergeschichteten Polblechen gebildet sind, wobei verschiedene Anzahlen von Polschenkelelementen (4a, 4b, 4c) in Statorlängsrichtung aufeinander gesetzt und mit einem zugehörigen Polring (2) oder einem Polringelement (2a, 2b, 2c) derart verbunden werden können, dass die zusammengesetzten Polschenkelelemente von dem umgebenden Polring (2) oder dem Polringelement (2a, 2b, 2c) zusammengehalten werden, um Statoren unterschiedlicher Bauhöhe auszubilden.

8. System nach Anspruch 7, wobei zumindest zwei Polschenkelelemente (4a, 4b, 4c) unterschiedlicher Bauhöhe vorgesehen sind, welche zum Ausbilden von Polschenkeln (4) unterschiedlicher Bauhöhe miteinander kombinierbar sind.

9. System nach Anspruch 7 oder 8, bei welchem der Polring (2) aus zumindest zwei Polringelementen (2a, 2b, 2c) zusammensetzbar ist.

10. System nach einem der Ansprüche 7 bis 9. bei welchem zumindest zwei Polringelemente (2a, 2b, 2c) unterschiedlicher Bauhöhe vorgesehen sind, welche zum Ausbilden von Polringen (2) unterschiedlicher Bauhöhe miteinander kombinierbar sind.

11. System nach Anspruch 10, bei welchem zu jedem Polschenkelelement (4a, 4b, 4c) bestimmter Bauhöhe ein passender Polring (2a, 2b, 2c) gleicher Bauhöhe vorgesehen ist.

12. System nach Anspruch 11, bei welchem die Polringelemente (2a, 2b, 2c) und die Polschenkelelemente (4a, 4b, 4c) unterschiedlicher Bauhöhe derart versetzt zueinander anordbar sind, dass sie einander überlappen.

13. System nach einem der Ansprüche 7 bis 12, bei welchem die Polschenkelelemente (4a, 4b, 4c) als Einzelpole (4) oder als zusammenhängender Polstern (6) ausgebildet sind.

## Claims

1. A stator for an electric motor with a multitude of salient poles (4) and with a pole ring (2) which peripherally surrounds the salient pole (4), with which the salient poles (4) are formed in each case of at least two premanufactured salient pole elements (4a, 4b, 4c) which are put together in the stator longitudinal direction, and in each case comprise a multitude of pole laminations layered on one another, **characterised in that** the assembled salient pole elements (4a, 4b, 4c) of each salient pole (4) are connected to the surrounding pole ring (2) or a surrounding pole ring element (2a, 2b, 2c), which are formed of a multitude of pole laminations layered on one another, in a manner such that the salient pole elements are held together by the pole ring or the pole ring element.

2. A stator according to claim 1, with which at least two salient pole elements (4a, 4b, 4c) have different construction heights.

3. A stator according to one of the preceding claims, with which the pole ring (2) is composed of at least two pole ring elements (2a, 2b, 2c).

4. A stator according to claim 3, with which at least two pole ring elements have different construction heights.

5. A stator according to claim 4, with which in each case one pole ring element (2a, 2b, 2c) has the same construction height as one salient pole element (4a, 4b, 4c), wherein the salient pole elements (4a, 4b, 4c) and the pole ring elements (2a, 2b, 2c) are arranged offset to one another in a manner such that they overlap one another.

6. A stator according to one of the preceding claims, with which the salient poles (4) are designed as individual poles or as a coherent pole star (6).

7. A system for the construction of stators for electric motors with individual salient pole elements (4a, 4b, 4c), which in each case comprise a multitude of pole laminations layered on one another, and associated pole rings (2) which are formed of a multitude of pole laminations which are layered on one another, wherein different numbers of salient pole elements (4a, 4b, 4c) are applied on one another in the longitudinal direction of the stator, and may be connected to an associated pole ring (2) or a pole ring element (2a, 2b, 2c), in a manner such that the assembled salient pole elements are held together by the surrounding pole ring (2) or the pole ring element (2a, 2b, 2c), in order to form stators with a different construction height.

8. A system according to claim 7, wherein at least two salient pole elements (4a, 4b, 4c) of a different construction height are provided, which may be combined with one another for forming salient poles (4) of a different construction height.

9. A system according to claim 7 or 8, with which the pole ring (2) may be assembled of at least two pole ring elements (2a, 2b, 2c).

10. A system according to one of the claims 7 to 9, with which at least two pole ring elements (2a, 2b, 2c) of a different construction height are provided, which may be combined with one another for forming pole rings (2) of a different construction height.

11. A system according to claim 10, with which a matching pole ring (2a, 2b, 2c) of the same construction height is provided for each salient pole element (4a, 4b, 4c) of a certain construction height.

12. A system according to claim 11, with which the pole ring elements (2a, 2b, 2c) and the salient pole elements (4a, 4b, 4c) of different construction height may be arranged offset to one another, in a manner such that they overlap one another.

13. A system according to one of the claims 7 to 12, with which the salient pole elements (4a, 4b, 4c) are designed as individual poles (4) or as a coherent pole star (6).

## Revendications

1. Stator pour un moteur électrique, comprenant une multiplicité de branches polaires (4) et un anneau polaire (2) entourant périphériquement les branches polaires (4), les branches polaires (4) étant alors formées chacune d'au moins deux éléments de branche polaire (4a, 4b, 4c) préfabriqués et assemblés suivant la direction longitudinale du stator, lesquels présentent chacun une multiplicité de tôles polaires placées l'une sur l'autre en couches, **caractérisé en ce que** les éléments de branche polaire (4a, 4b, 4c), assemblés, de chaque branche polaire (4) sont reliés à l'anneau polaire (2), placé autour, ou à un élément d'anneau polaire (2a, 2b, 2c) placé autour, qui est formé d'une multiplicité de tôles polaires superposées en couches, d'une manière telle que les éléments de branche polaire soient maintenus ensemble par l'anneau polaire ou l'élément d'anneau polaire.

2. Stator selon la revendication 1, dans lequel au moins deux éléments de branche polaire (4a, 4b, 4c) présentent des hauteurs d'encombrement différentes.

3. Stator selon l'une des revendications précédentes, dans lequel l'anneau polaire (2) est composé d'au moins deux éléments d'anneau polaire (2a, 2b, 2c).

4. Stator selon la revendication 3, dans lequel au moins deux éléments d'anneau polaire présentent des hauteurs d'encombrement différentes.

5. Stator selon la revendication 4, dans lequel un élément d'anneau polaire (2a, 2b, 2c) présente chaque fois la même hauteur d'encombrement qu'un élément de branche polaire (4a, 4b, 4c), les éléments de branche polaire (4a, 4b, 4c) et les éléments d'anneau polaire (2a, 2b, 2c) étant alors disposés suivant un décalage mutuel tel, qu'ils se chevauchent l'un l'autre.

6. Stator selon l'une des revendications précédentes, dans lequel les branches polaires (4) sont réalisées sous forme de pôles individuels ou sous forme d'un ensemble cohérent de pôles en étoile (6).

7. Système pour la construction de stators pour moteurs électriques, comprenant des éléments de branche polaire (4a, 4b, 4c) individuels, qui présentent chacun une multiplicité de tôles polaires placées l'une sur l'autre en couches, et des anneaux polaires (2) associés, qui sont formés d'une multiplicité de tôles polaires superposées en couches, des nombres différents d'éléments de branche polaire (4a, 4b, 4c) pouvant alors être posés l'un sur l'autre dans la direction longitudinale du stator et reliés à un anneau polaire (2) associé ou un élément d'anneau polaire (2a, 2b, 2c) d'une manière telle, que les éléments de branche polaire assemblés soient maintenus ensemble par l'anneau polaire (2), qui les entoure, ou l'élément d'anneau polaire (2a, 2b, 2c), pour la réalisation de stators de hauteurs d'encombrement différentes.

8. Système selon la revendication 7, pour lequel sont prévus au moins deux éléments de branche polaire (4a, 4b, 4c) de hauteurs d'encombrement différentes, qui peuvent être combinés l'un à l'autre en vue de la réalisation de branches polaires (4) de hauteurs d'encombrement différentes.

9. Système selon la revendication 7 ou 8, dans lequel l'anneau polaire (2) peut être composé d'au moins deux éléments d'anneau polaire (2a, 2b, 2c).

10. Système selon l'une des revendications 7 à 9, dans lequel sont prévus au moins deux éléments d'anneau polaire (2a, 2b, 2c) de hauteurs d'encombrement différentes, qui peuvent être combinés l'un à l'autre en vue de la réalisation d'anneaux polaires (2) de hauteurs d'encombrement différentes.

11. Système selon la revendication 10, dans lequel pour chaque élément de branche polaire (4a, 4b, 4c) de hauteur d'encombrement déterminée, il est prévu un anneau polaire adapté (2a, 2b, 2c) de même hauteur d'encombrement.

12. Système selon la revendication 11, dans lequel les éléments d'anneau polaire (2a, 2b, 2c) et les éléments de branche polaire (4a, 4b, 4c) de hauteurs d'encombrement différentes peuvent être disposés suivant un décalage mutuel tel, qu'ils se chevauchent l'un l'autre.

13. Système selon l'une des revendications 7 à 12, dans lequel les éléments de branche polaire (4a, 4b, 4c) sont réalisés sous forme de pôles individuels (4) ou sous forme d'un ensemble cohérent de pôles en étoile (6).
